# EUROPÄISCHE PATENTSCHRIFT

(11) **EP 0 771 113 B1**
(45) Veröffentlichungstag und Bekanntmachung des Hinweises auf die Patenterteilung: **07.05.2003**
(21) Anmeldenummer: 96117110.5
(22) Anmeldetag: 24.10.1996
(51) Int. Cl.: H04N 7/088

(54) **Videoempfangsgerät mit einer Teletextverarbeitungseinrichtung**
Video receiver with a teletext processing device
Appareil de réception de vidéo avec un dispositif de traitement de télétexte

(30) Priorität: 27.10.1995 DE 19540172
(43) Veröffentlichungstag der Anmeldung: 02.05.1997
(73) Patentinhaber: Micronas Munich GmbH, 81541 München (DE)
(72) Erfinder: Dorsch, Werner, 91083 Baiersdorf (DE)
(74) Vertreter: Patentanwälte Westphal, Mussgnug & Partner

(56) Entgegenhaltungen:
- EP-A- 0 669 761
- WO-A-93/12611
- GB-A- 2 232 031
- US-A- 5 296 931

## Beschreibung

Die Erfindung betrifft ein Videoempfangsgerät, das eine Teletextverarbeitungseinrichtung enthält, durch die in ihr gespeicherte Zeichen an einem Bildschirm darstellbar sind.

In der Literaturstelle Funkschau 12/95: "Elektronische TV-Guides" Seiten 48 bis 51 sind Übertragungsstandards beschrieben, mit denen zusätzlich zum Bildinhalt der Fernsehsendung auch an die Sendung gekoppelte Daten übertragen werden. Gemäß dem System TV:aktiv wird zeitgleich zur gerade laufenden Sendung ein Langwellensignal ausgestrahlt, das unter anderem eine Kennung für die Sendungsart enthält. Die Kennung besteht aus einer der Sendungsart zugeordneten Zahl. Darüber hinaus ist in der genannten Literaturstelle beschrieben, daß im VPS-Signal, welches ein Standard zur Programmierung von Videorekordern ist, der vor allem für den automatischen Start des Videorekorders bei Sendungsbeginn Bedeutung erlangt hat, eine Jugendschutzkennung zur Auswahl von kindergerchten Programmen vorgesehen. Auf die Darstellung der durch diese Dienste übertragenen Informationen am Bildschirm des Fernsehgerätes wird nicht eingegangen.

In der GB-A-2 232 031 ist ein Empfangsgerät gezeigt, bei dem senderseitig übertragene Zeichendaten zusammen mit der gerade dargestellten Sendung am Bildschirm dargestellt werden. Die Daten werden in Zusammenhang mit dem Audiosignal amplitudenmoduliert übertragen. Zur Darstellung sind alphanumerische Zeichen vorgesehen, die ein im Empfangsgerät angeordneter Zeichengenerator erzeugt. Für jedes alphanumerische Zeichen wird ein entsprechendes Datum übertragen und direkt vom Zeichengenerator umgesetzt. Als Inhalt für den darzustellenden Text werden Titel oder Inhalt der Sendung, Sendeanstalt, Sendungsendzeit oder Programmvorschau vorgeschlagen.

In der Literaturstelle RFE, 7.94, Lärch, Dietmar: "Megatext im Einsatz", Seiten 16-17 ist eine Anwendung eines Teletextprozessors beschrieben, bei der aus den herkömmlichen Teletextseiten die für die momentane Sendezeit zutreffende Programminformation ermittelt wird und in das gerade empfangene Fernsehbild eingeblendet wird.

Der Erfindung liegt die Aufgabe zugrunde, ein Videoempfangsgerät anzugeben, das die Anzeige von einer parallel zur Sendung übertragenen Sendungsartkennung mit möglichst einfachen Mitteln erreicht.

Erfindungsgemäß wird dies durch ein Videoempfangsgerät mit den Merkmalen des Patentanspruches 1 gelöst.

Für die erfindungsgemäße Lösung werden nur standardgemäß verfügbare Bauelemente verwendet. Die Teletextverarbeitungseinrichtung, im wesentlichen ein Teletext-Prozessor mit chipinterner oder chipexterner Speicherungsmöglichkeit, enthält die Darstellungsinformation für alle den Sendungsartkennungen zugeordneten Zeichen. Die Teletextverarbeitungseinrichtung weist darüber hinaus Steuerungsmittel auf, durch die die Erkennung der senderseitig übertragenen Sendungsartkennung ermöglicht wird, so daß daraufhin das entsprechend zugeordnete, gespeicherte Symbol zusammen mit der empfangenen Sendung am Bildschirm dargestellt wird. Die Änderungen in der Teletextverarbeitungseinrichtung, die zur Realisierung der Erfindung notwendig sind, sind die Bereitstellung von Speicherplatz sowie entsprechende Software-Steuerungsroutinen, durch die die Auswertung der empfangenen Kennung sowie die Veranlassung der Darstellung des zugeordneten Symbols ausgeführt wird.

Wenn die Sendungsartkennung gemäß einem Videoprogrammsystem -(VPS/VPT-)Standard oder einem Teletextstandard übertragen wird, ist es zweckmäßig, die Abtrennung der entsprechenden Daten aus dem Videosignal auch im Teletextprozessor durchzuführen. Gleichwertig zu dem beispielsweise in Deutschland verwendeten Videoprogrammsystemstandard kann auch der in anderen Staaten, beispielsweise Großbritannien, angewandte Program Delivery Control-(PDC-)Standard verwendet werden. Wenn die Übertragung der Sendungsartkennungen, wie im Beispiel des Dienstes TV:aktiv in einem vom Videosignal getrennten Langwellensignal erfolgt, vermittelt der für das TV:aktiv-Signal vorgesehene Empfänger die abgetrennten Daten an den Teletextprozessor, der wiederum deren spezielle Auswertung, deren Zuordnung zu einem Symbol sowie dessen Darstellung am Bildschirm übernimmt. Der Teletextprozessor ist zur Einspeisung dieser Daten üblicherweise mit einer digitalen Schnittstelle, beispielsweise für einen sogenannten I2C-Bus oder M3L-Bus, ausgestattet.

Zweckmäßigerweise enthalten die darzustellenden Symbole eine schematische, bildliche Darstellung, die vom Betrachter mit der Sendungsart assoziiert wird. Beispielsweise können Kindersendungen mit einer Abbildung für ein Kinderspielzeug, etwa mit einem "Teddybär" gekennzeichnet werden, Kriminalsendungen mit einem Revolver oder medizinische Sendungen mit einem Äskulapstab. Durch die gleichzeitige Darstellung von Symbol und Bildinhalt der Sendung am Bildschirm ist es für den Betrachter einfach und schnell möglich, die Sendungsart zu erfassen. Ohne die erfindungsgemäße Darstellung des Symbols müßte der Betrachter längere Zeit dem Sendungsverlauf folgen, um die Sendungsart zu erkennen oder etwa langwierig in Videotexttafeln das darin übertragene Sendeprogramm lesen. Insbesondere Fernsehzuschauer wie Kinder, denen das Erfassen eines Textes Schwierigkeiten bereitet, können anhand des dargestellten Symbols schnell ihre bevorzugte Sendungsgruppe erkennen. Der Betrachter assoziiert mit dem dargestellten Symbol automatisch einen erwarteten Sendungsinhalt. Die Bedienung des Fernsehgerätes wird dadurch vereinfacht und komfortabler.

Nachfolgend wird die Erfindung anhand der in der Zeichnung dargestellten Figur näher beschrieben. Diese zeigt ein Prinzipschaltbild eines Fernsehgerätes gemäß der Erfindung. Das Fernsehgerät empfängt über eine Antenne 1 ein Videosignal. Das Videosignal enthält standardgemäß analoge Bildinformation, die am Bildschirm 2 dargestellt wird. Innerhalb der Vertikalaustastlücke des Videosignals werden digitale Daten übertragen, im vorliegenden Fall beispielsweise gemäß eines Teletextstandards und/oder gemäß eines Videoprogrammsystemstandards, der bekanntlich an die Teletextübertragung angelehnt ist. Durch die Einrichtung 3 wird das Videosignal in das Basisband umgesetzt und liegt als sogenanntes Farb-Bild-Austast-Signal (FBAS) vor. Hierzu enthält die Einrichtung 3 beispielsweise Tuner, Zwischenfrequenzstufe und Demodulator. Innerhalb des Bildverarbeitungskanals 4 werden mit an sich bekannten Mitteln aus dem FBAS-Signal RGB-Signale erzeugt, durch die mittels einer Videoendstufe 5 die Bildröhre 2 ansteuerbar ist. Die RGB-Signale enthalten die übliche Bildinformation 20 des Fernsehbildes.

Außerdem ist eine Teletextverarbeitungseinrichtung 6 im erfindungsgemäßen Fernsehgerät vorgesehen. Dieser wird eingangsseitig das FBAS-Signal zugeführt. Ausgangsseitig werden R'G'B'-Signale erzeugt, die in der Videoendstufe mit den RBG-Signalen verknüpft werden. Dabei sorgt die Teletextverarbeitungseinrichtung 6 in Zusammenwirken mit der Videoendstufe 5 dafür, daß ein Symbol 21 in das bewegte Fernsehbild 20 eingeblendet wird. Vorzugsweise befindet sich das Symbol 21 ortsfest stets an der gleichen Stelle, im Ausführungsbeispiel an der linken oberen Ecke des Bildschirmes 2.

Die Teletextverarbeitungseinrichtung 6, vorzugsweise ein Einchip-Teletextprozessor, enthält eingangsseitig eine Akquisitionseinrichtung 7. Mit der Einrichtung 7 werden die in der Vertikalaustastlücke des FBAS-Signals enthaltenden digitalen Daten, die im Ausführungsbeispiel Teletextdaten oder VPS-Daten sein können, abgetrennt. Eine Steuerungseinrichtung 8, vorzugsweise ein Mikroprozessorkern, sorgt für die interne Ablaufsteuerung des Teletextprozessors 6. In einem ROM 9 ist die Darstellungsinformation aller möglichen Symbole 21 gespeichert. Ein ausgangsseitig vorgesehener Darstellungsgenerator 10 sorgt unter Vermittlung der CPU 8 dafür, daß die im ROM 9 gespeicherten Zeichen in die R'G'B'-Signale umgesetzt werden.

Das erfindungsgemäße Gerät arbeitet zur Darstellung des Symbols 21 wie folgt:

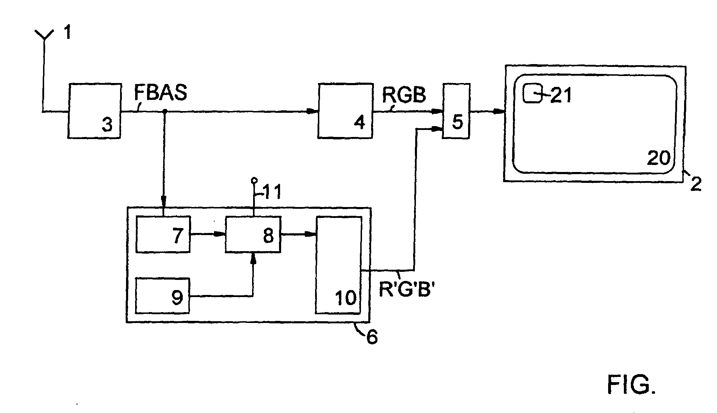

In den VPS/PDC-Daten bzw. in den Teletextdaten des FBAS-Signals ist an einer vorgegebenen Stelle innerhalb des Datenstromes, die beispielsweise einen bestimmten, vorgegebenen Abstand von Datenbits zu einem Referenzzeitpunkt aufweisen kann oder durch eine bestimmte Bitkennung eingeleitet wird, ein digitales Datenwort vorgesehen, das eine Kennung für die gerade im FBAS-Signal enthaltene Sendungsart angibt. Beispielsweise ist dies eine Kennung für die Sendungsart Kindersendung, Kriminalsendung, medizinische Sendung oder Nachrichtensendung. Die digitalen Daten werden in der Einrichtung 7 abgetrennt und der CPU 8 zugeführt. Diese ermittelt softwaregesteuert, welche Kennung vorliegt. Daraufhin wird das der Kennung zugeordnete Zeichen aus ROM 9 ausgelesen und dem Darstellungsgenerator 10 zugeführt. Dieser erzeugt die entsprechenden R'G'B'-Signale, die zur Einblendung des Symbols 21 in das Bild 20 der laufenden Sendung am Bildschirm 2 führt. Vom Betrachter wird dadurch, daß ihm das Symbol 21 bereits bekannt ist, wesentlich schneller die Art der dargestellten Sendung erkannt als dies ohne das Symbol 21 nur unter Verfolgung des Bildinhalts 20 möglich wäre.

Im Teletextprozessor sind eine Vielzahl von vorbestimmten Symbolen gespeichert, die eine bildhafte Grafikdaten enthalten, die je einer Sendung eines Typs zuordenbar sind. Sendungen der gleichen Art, z. B. Kindersendung, werden jeweils gleiche Zeichen, z. B. Teddy-Bär, zugeordnet. Zur Erhöhung der Wiedererkennung werden die auch unterschiedlichen Sendungsarten zugeordneten Zeichen stets an der gleichen Stelle des Bildschirms dargestellt. Einer Sendungsart ist nur ein einziges Symbol zugeordnet. Im allgemeinen wird dann beim Empfang einer Sendung nur dieses, Symbol dargestellt.

Bei anderen als innerhalb von VPS/PDC- oder Teletextsignalen übertragenen Sendungsartkennungen, beispielsweise solchen, die mittels des Dienstes TV:aktiv übertragen werden, ist eine vom Teletextprozessor 6 getrennte Empfangseinrichtung notwendig, die die empfangenen digitalen Daten am digitalen Schnittstellenanschluß 11 (z. B. nach I2C-, M3L-Spezifikation) in den Teletextprozessor 6 einspeist.

## Patentansprüche

1. Videoempfangsgerät, enthaltend eine Teletextverarbeitungseinrichtung (6), durch die in ihr gespeicherte Zeichen an einem Bildschirm (2) darstellbar sind, und eine Einrichtung (5, 6), durch die an ein Videosignal gekoppelte digitale Daten empfangbar sind, die einer im Videosignal (FBAS) enthaltenen Sendung zugeordnet sind und die eine Sendungsartkennung enthalten, wobei in der Teletextverarbeitungseinrichtung (6) zu jeder von einer Vielzahl der Sendungsartkennungen ein zugeordnetes Zeichen gespeichert ist und die Teletextverarbeitungseinrichtung (6) derart ausgeführt ist, daß in Abhängigkeit von der empfangenen Sendungsartkennung das ihr zugeordnete Zeichen (21) am Bildschirm (2) zusammen mit dem im empfangenen Videosignal enthaltenen Videobild (20) dargestellt wird.

2. Videoempfangsgerät nach Anspruch 1,
**dadurch gekennzeichnet, daß**
die Zeichen jeweils ein der Sendungsart thematisch zugeordnetes graphisches Symbol enthalten.

3. Videoempfangsgerät nach Anspruch 2,
**dadurch gekennzeichnet, daß**
jedes Symbol an einer gleichen vorgegebenen Stelle (21) des Bildschirms darstellbar ist.

4. Videoempfangsgerät nach einem der Ansprüche 1 bis 3,
**dadurch gekennzeichnet, daß**
die Sendungsartkennung als digitales Datenwort an einer vorgegebenen Stelle innerhalb eines Datenstroms gemäß einem Videoprogrammsystemstandard oder einem Program Delivery Control-Standard oder eines Teletextstandard enthalten ist.

## Claims

1. A video receiver, containing a teletext processing device (6), by which characters stored therein can be represented on a screen (2), and a device (5, 6), by which the digital data coupled to a video signal can be received, which are associated with a broadcast contained in the video signal (composite colour signal) and which contain a broadcast type identification, where an associated character is stored in the teletext processing device (6) for each of a plurality of broadcast type identifications and the teletext processing device (6) is designed in such a manner that, in dependence on the received broadcast type identification, the character (21) associated therewith is represented on the screen (2) together with the video picture (20) contained in the received video signal.

2. A video receiver according to Claim 1,
**characterised in that** the characters in each case contain a graphical symbol that is thematically associated with the type of broadcast.

3. A video receiver according to Claim 2,
**characterised in that** each symbol can be represented at the same predetermined position (21) of the screen.

4. A video receiver according to one of Claims 1 to 3,
**characterised in that** the broadcast type identification is contained as a digital data word at a predetermined site within a data stream in accordance with a video program system standard or a program delivery control standard or a teletext standard.

## Revendications

1. Récepteur vidéo comportant une installation de traitement de télétexte (6) permettant de représenter sur un écran (2) les signes enregistrés dans celle-ci ainsi qu'une installation (5, 6) permettant de recevoir les données numériques couplées à un signal vidéo, associées à une émission contenue dans le signal vidéo (FBAS) et contenant une caractéristique de type d'émission, dans lequel
l'installation de traitement de télétexte (6) contient en mémoire un signe associé à chacune des différentes caractéristiques de type d'émission et l'installation de traitement de télétexte (6) est réalisée de façon qu'en fonction de la caractéristique de type d'émission reçue, le signe (21) correspondant apparaisse sur l'écran (2) avec l'image vidéo (20) contenue dans le signal vidéo reçu.

2. Récepteur vidéo selon la revendication 1,
**caractérisé en ce que**
les signes contiennent chaque fois un symbole graphique associé de manière thématique au type d'émission.

3. Récepteur vidéo selon la revendication 2,
**caractérisé en ce que**
chaque symbole est représenté au même endroit prédéterminé (21) de l'écran.

4. Récepteur vidéo selon l'une des revendications 1 à 3,
**caractérisé en ce que**
la caractéristique de type d'émission est contenue comme mot de données numériques à un endroit prédéterminé d'un flux de données selon une norme de système de programme vidéo ou une norme de commande de distribution de programme ou d'une norme de télétexte.
